# EUROPEAN PATENT APPLICATION

(11) **EP 0 620 512 A1**
(43) Date of publication of application: **19.10.1994**
(21) Application number: 93922641.1
(22) Date of filing: 14.10.1993
(51) Int. Cl.: G05B 19/417

(54) **NUMERIC CONTROLLER**

(30) Priority: 26.10.1992 JP 287647/92
(71) Applicant: FANUC LTD., Minamitsuru-gun, Yamanashi 401-05 (JP)
(72) Inventor: SHIBATA, Tomoatsu, Fujiyoshida-shi, Yamanashi 403 (JP)
(74) Representative: Brunner, Michael John
(86) International application number: JP9301487
(87) International publication number: WO9410615

(57) **Abstract**

This invention relates to a CNC provided with an autonomous function as one of the constituent elements of an FA system, etc., using a host computer as the primary constituent. A CNC system (2A) comprises a CNC board (21), a PMC board (22) and a communication board (24), and plays the role of a machining cell in the FA system inclusive of a machine tool (23). The PMC board (22) receives a request indicated by the FA computer through a LAN (11) and the communication board (24), and executes suitable processing for the machine tool (23). It sends the processing result back to the FA computer through the communication board (24). Further, the PMC board (22) is provided with instruction means (22A). The instruction means (22A) makes suitable judgement in accordance with the condition of the machine tool (23) on the basis of various data sent from the machine tool (23), and requests suitable processings required to the FA computer, the PLC and other CNC system. The instruction means also makes suitable judgement on the basis of data from units other than itself, and requests necessary processings to the FA computer, the PLC and other CNC system.

## Description

### TECHNICAL FIELD

The present invention relates to a numerical control apparatus, and more specifically, to a numerical control apparatus serving as a component of a factory automation system (hereinafter, referred to as a FA system) and the like having a host computer serving as the central unit of the system.

### BACKGROUND ART

Conventionally, in a network environment such as a FA system having a host computer serving as the central unit of the system, a numerical control apparatus (hereinafter, referred to as a CNC) has a role only as a sever.

More specifically, the CNC has only such a passive role that it carries out a proper process in accordance with a request instructed from the host computer and returns the result of the process to the host computer again.

Nevertheless, in the today's highly sophisticated network environment, the CNC is further required to make a proper decision by itself in accordance with the state of machine tools surrounding it and instruct the host computer and other programmable controllers and CNCs to take necessary measures in addition to the above passive role. That is, the CNC is required to have an autonomous function.

### DISCLOSURE OF THE INVENTION

Taking the above into consideration, an object of the present invention is to provide a CNC as a component of a network with an autonomous function.

To solve the above problem, according to the present invention, there is provided a numerical control apparatus serving as a component of a FA system and the like having a host computer for controlling the system, which comprises instruction means provided for a programmable controller for controlling the operation of a machine tool to instruct to other components to carry out a process which is determined necessary as a result that the state of the machine tool or the state of the other components is monitored.

The instruction means is provided for the programmable controller of the numerical control apparatus so that the instruction means instructs the other components to carry out a process which is determined necessary as a result that the state of the machine tool or the state of the other components is monitored. As a result, the numerical control apparatus can be provided with a function for requiring the other components to carry out a necessary process. Therefore, the numerical control apparatus which conventionally has a role only as a server can be arranged as an autonomous type.

### BRIEF DESCRIPTION OF THE DRAWINGS

FIG. 1 is a diagram showing an arrangement of a numerical control apparatus (CNC system) of the present invention;
FIG. 2 is a diagram showing an arrangement of a FA system to which the numerical control apparatus of the present invention is applied; and
FIG. 3 is a block diagram of a hardware of the numerical control apparatus of the present invention.

### BEST MODE FOR CARRYING OUT THE INVENTION

An embodiment of the present invention will be described below with reference to the drawings.

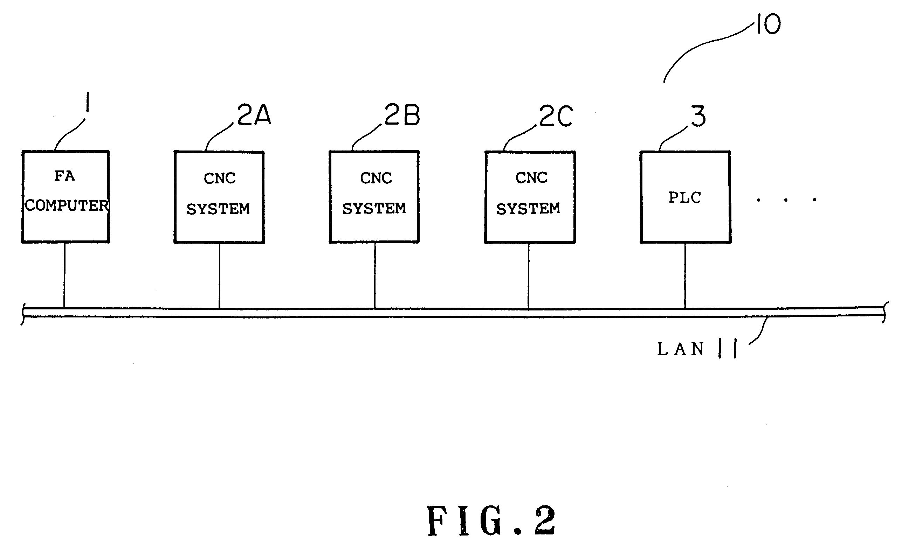

FIG. 2 is a diagram showing an arrangement of a FA system to which the numerical control apparatus of the present invention is applied, wherein a FA system 10 is composed of, for example, a LAN. A FA computer 1 supervises CNC systems 2A, 2B, 2C, a PLC 3 and the like interconnected through the LAN 11 to control the operation thereof. Further, the respective CNCs 2A, 2B, 2C give instructions to the PLC 3, FA computer 1 and other CNCs based on the result of a decision made by themselves. That is, they are arranged as an autonomous CNC. The autonomous CNC will be described below.

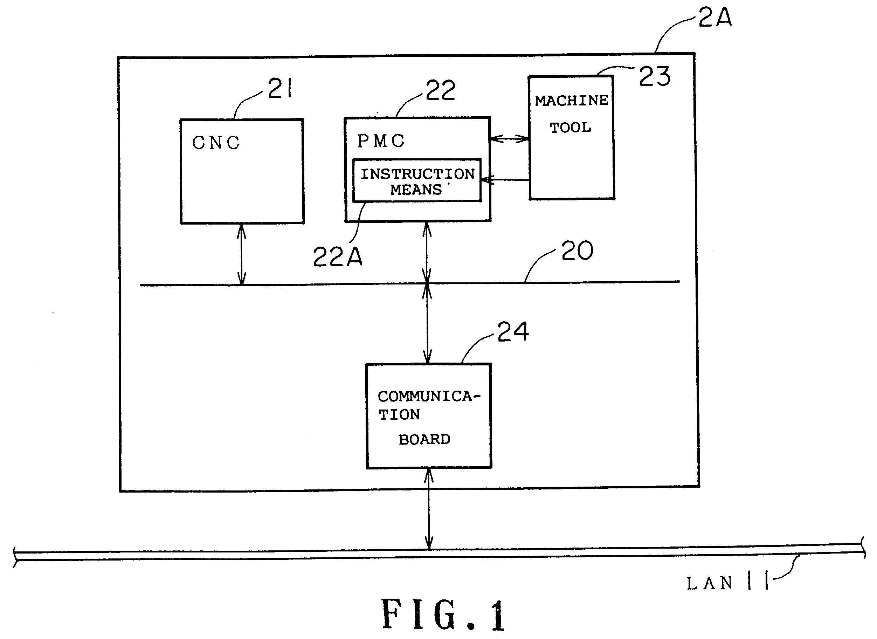

FIG. 1 is a diagram showing an arrangement of the numerical control apparatus (CNC system) of the present invention. Although description will be made with reference to the CNC system 2A of FIG. 2 as an example here, other CNC systems are arranged similarly to it. In FIG. 1, the CNC system 2A is composed of a CNC board 21, a programmable controller (hereinafter, referred to as a PMC) board 22 and a communication board 24. Further, the CNC system 2A plays a role as a machining cell in the FA system 10 including a machine tool 23. These respective boards 21, 22, 24 are interconnected through a bus 20.

The PMC board 22 receives a request instructed from the FA computer 1 through the LAN 11 and communication board 24 and applies a proper process to the machine tool 23. Further, the PMC board 22 returns the result of the process and the like to the FA computer 1 again through the communication board 24.

Further, the PMC board 22 is provided with instruction means 22A, which makes a proper decision in accordance with the state of the machine tool 23 based on various data supplied from the machine tool 23 and requires the FA computer 1, PLC 3 and the other CNC systems 2B, 2C to take necessary measures. Further, the PMC board 22 makes a proper decision based on data supplied from the units other than itself, e.g., various data with respect to an I/O unit and the like supplied from the PLC 3 and requires the FA computer 1, PLC 3 and the other CNC systems 2B, 2C to take necessary measures in the same way. The PMC board 22 outputs the instruction for the requirement from instruction means 22A through the communication board 24 and LAN 11.

As described above, according to the present invention, since the PMC board 22 is provided with the instruction means 22A, the CNC system 2A can autonomously make a decision by itself and outputs a proper instruction. More specifically, the CNC system 2A can be arranged as an autonomous type CNC and makes the programmable controller 22 to execute a function which is originally to be executed by the FA computer 1 in place of it. Therefore, a load on the FA computer 1 is reduced and the processing speed of the system as a whole can be increased accordingly.

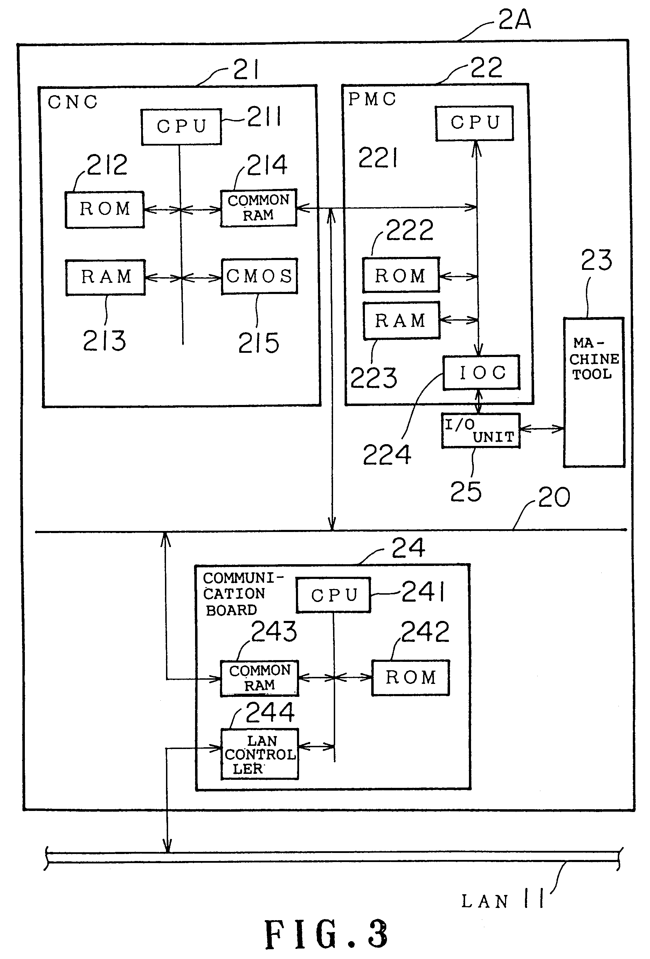

FIG. 3 is a block diagram of a hardware of the numerical control apparatus of the present invention. As shown in FIG. 3, the respective boards 21, 22 and 24 composing the CNC system 2A have processors 211, 221 and 241 serving as the central units thereof.

The ROM 212 of the CNC board 21 stores a system program for controlling the operation of the CNC as a whole. A common RAM 214 is used to transfer data between the CNC board 21 and the PMC board 22. Further, the common RAM 214 stores data necessary to make access from the both sides at the same time. A RAM 213 stores temporary calculation data and the like. A CMOS 215 is arranged as a non-volatile memory and stores machining programs and various parameters. Further, the CMOS 215 also stores parameters and the like necessary to the PMC board 22. In FIG. 3, a graphic control circuit, axis control circuit, servo amplifier and the like are omitted.

As described above, the PMC board 22 is connected to the CNC board 21 through the common RAM 214. A ROM 222 stores a management program for controlling the PMC. This system program includes an application program for controlling the operation of the machine tool 23 and a program necessary for the operation as the autonomous type CNC according to the present invention. The above instruction means 22A has a function of software which is executed by the processor 221 in accordance with the program stored in the ROM 222. A RAM 223 stores I/O signals. An I/O control circuit (IOC) 224 converts output signals stored in a RAM 223 into serial signals and transfers the same to an I/O unit 25. Further, the I/O control unit 224 converts serial input signals from the I/O unit 25 into parallel signals and transfers the same to the processor 221. The machine tool 23 is connected to the I/O unit 25. Signals are transferred between the PMC board 22 and the machine tool 23 through the I/O unit 25.

The communication board 24 is connected to the above CNC board 21 and PMC board 22 through the common RAM 243. A ROM 242 stores a program for receiving signals instructed from the FA computer 1 and outputting the same to the PMC board 22 and a program for receiving signals instructed from the PMC board 22 and outputting the same to the other units such as the FA computer 1, PLC 3 and the like. The processor 241 controls the communication board 24 as a whole in accordance with the program stored in the ROM 242 thereof. Instruction signals are transferred between the CNC system 2A as a whole and the other units such as the FA computer 1 and the like through a LAN controller 244 provided for the communication board 24.

As described above, according to the present invention, the instruction means is provided for the programmable controller of the numerical control apparatus to instruct the other components to carry out a process which is determined necessary as a result that the state of the machine tool or the state of the other components is monitored. Consequently, the numerical control apparatus can be provided with a function for requiring the other components to carry out a necessary process. More specifically, the numerical control apparatus which conventionally has a role only as a simple server can be arranged as an autonomous type.

## Claims

1. A numerical control apparatus serving as a component of a factory automation system and the like having a host computer serving as a central unit of the system, comprising:
instruction means provided for a programmable controller which controls the operation of a machine tool for instructing to other components to carry out a necessary process which is determined necessary as a result that the state of said machine tool or the state of said other components is monitored.

2. A numerical control apparatus according to claim 1, wherein signals are transferred between said programmable controller and said other components through communication means.
